# FASCICULE DE BREVET EUROPEEN

(11) **EP 2 281 494 B1**
(45) Date de publication et mention de la délivrance du brevet: **29.05.2013**
(21) Numéro de dépôt: 10170523.4
(22) Date de dépôt: 22.07.2010
(51) Int. Cl.: A47J 43/28, A47G 19/34, G01F 19/00

(54) **Cuillère doseuse**
Metering spoon
Dosierlöffel

(30) Priorité: 03.08.2009 FR 0955459
(43) Date de publication de la demande: 09.02.2011
(73) Titulaire: SEB SA, 69130 Ecully (FR)
(72) Inventeur: Turpin, Romain, 14210, Saint Honorine Du Fay (FR); Masson, Anthony, 21850 Saint Apolinaire (FR); Morin, Gilles, 14210, Sainte Honorine Du Fay (FR)
(74) Mandataire: Novagraaf Technologies

(56) Documents cités:
- AU-A- 913 166
- JP-A- 59 112 228
- US-A- 2 668 427
- US-A- 3 543 814

## Description

La présente invention concerne une cuillère doseuse pour produit pulvérulent, tel que du café moulu, ainsi qu'un dispositif de transvasement d'un tel produit adapté à coopérer avec une telle cuillère.

On connaît de nombreux types de cuillères doseuses qui peuvent être utilisées pour verser du café moulu dans un appareil pour produire une boisson de café. Toutefois, souvent ces appareils présentent des ouvertures d'introduction de mouture de faible section, et il est fréquent avec les cuillères actuelles qu'une partie de la mouture tombe à côté de l'ouverture, souvent sur le carter de l'appareil.

Une cuillère similaire est connu du document US 2 668 427 A1.

La présente invention vise à permettre un remplissage propre d'un appareil de préparation de boisson en mouture de café.

Selon un premier aspect, une cuillère doseuse conforme à la présente invention est définie dans la revendication 1.

Selon un second aspect, un système de transvasement conforme à la présente invention est défini dans la revendication 6.

Ainsi, ces deux éléments permettent, même séparément, de remplir proprement l'appareil de préparation de boisson. Concernant la cuillère, quand elle est au-dessus de l'ouverture d'introduction de mouture de l'appareil, il suffit d'entraîner le corps mobile dans sa position de vidange pour que le contenu tombe entièrement dans l'ouverture, étant donné qu'il n'est pas nécessaire de déplacer la cuillère. Concernant le dispositif de transvasement, il suffit de le disposer de sorte que son ouverture inférieure de décharge se trouve au-dessus de l'ouverture d'introduction de mouture de l'appareil ; ainsi, une fois que la cuillère est introduite dans la cavité de réception, et à moins de l'en retirer, son contenu ne peut en sortir que par son ouverture de décharge.

D'autres particularités et avantages de la présente invention apparaîtront dans le mode de réalisation donné à titre d'exemple et illustré par les dessins mis en annexe dans lesquels :
La figure 1 est une vue en perspective d'une cuillère doseuse conforme à la présente invention, le corps mobile étant dans sa position de stockage et la raclette d'arasage étant dans sa position d'ouverture,
La figure 2 est une vue similaire à la figure 1, la raclette d'arasage étant dans sa position d'arasage,
La figure 3 est une vue en perspective d'un dispositif de transvasement conforme à la présente invention,
La figure 4 est une vue de profil du dispositif de transvasement de la figure 3 et de la cuillère doseuse des figures 1 et 2, cette dernière étant hors du dispositif de transvasement,
La figure 5 est une vue similaire à la figure 4, la cuillère doseuse étant dans une position proche de sa position de décharge et son corps mobile étant dans une position intermédiaire entre sa position de stockage et sa position de vidange, et
La figure 6 est une vue similaire aux figures 4 et 5, la cuillère doseuse étant dans sa position de décharge et le corps mobile dans sa position de vidange.

Un système de versement 1 conforme à la présente invention comprend une cuillère doseuse 2 et un dispositif de transvasement 3 qui est adapté à recevoir la cuillère doseuse 2.

La cuillère doseuse 2 comprend un manche de préhension 4 qui s'étend selon une direction longitudinale 5, et un réservoir 6 adapté à contenir un produit pulvérulent, tel que du café moulu. Le réservoir 6 comporte une ouverture supérieure de remplissage, et il est délimité par deux corps 7, 8 : l'un 7 fixe par rapport au manche 4, l'autre 8 mobile. Le corps mobile 8 est mobile par rapport au corps fixe 7 entre une position de stockage et une position de vidange dans laquelle il découvre une ouverture de vidange au fond du réservoir 6. Ici, le corps mobile 8 est monté en rotation par rapport au corps fixe 7, et plus précisément, il est monté en rotation autour d'un axe 9 qui, dans le présent exemple, est à la fois perpendiculaire à la direction longitudinale 5 du manche 4, et au niveau de l'ouverture de remplissage.

Dans le présent mode de réalisation, le corps fixe 7 est formé par une paroi 7 verticale plane qui pend depuis le manche 4. De façon plus précise, cette paroi 7 verticale forme la limite arrière du réservoir 6. Par ailleurs, cette paroi 7 a la forme générale d'un demi-disque. Le manche 4 est prolongé dans la direction longitudinale 5, au delà du corps fixe 7, par deux doigts 10 qui s'étendent longitudinalement de chaque côté du corps fixe 7. Ces deux doigts 10 portent l'arbre de rotation du corps mobile 8.

Dans le présent mode de réalisation, le corps mobile 8 a sensiblement la forme d'un quart de sphère. En outre, afin de permettre son déplacement de l'une à l'autre de ses positions de stockage et de vidange, le corps mobile 8 comprend des organes d'activation 11. Ici, ces organes d'activation 11 sont formés par deux ergots 11 faisant saillie verticalement au-delà de l'ouverture de remplissage du réservoir 6. Ces deux ergots 11 sont disposés en avant de l'axe de rotation 9 du corps mobile 8, à proximité du corps fixe 7.

Dans le présent mode de réalisation, la cuillère doseuse 2 comprend également un organe élastique qui sollicite le corps mobile 8 dans sa position de stockage. Ainsi, dans le présent exemple, les organes d'activation 11 permettent le déplacement du corps mobile 8 de sa position de stockage à sa position de vidange.

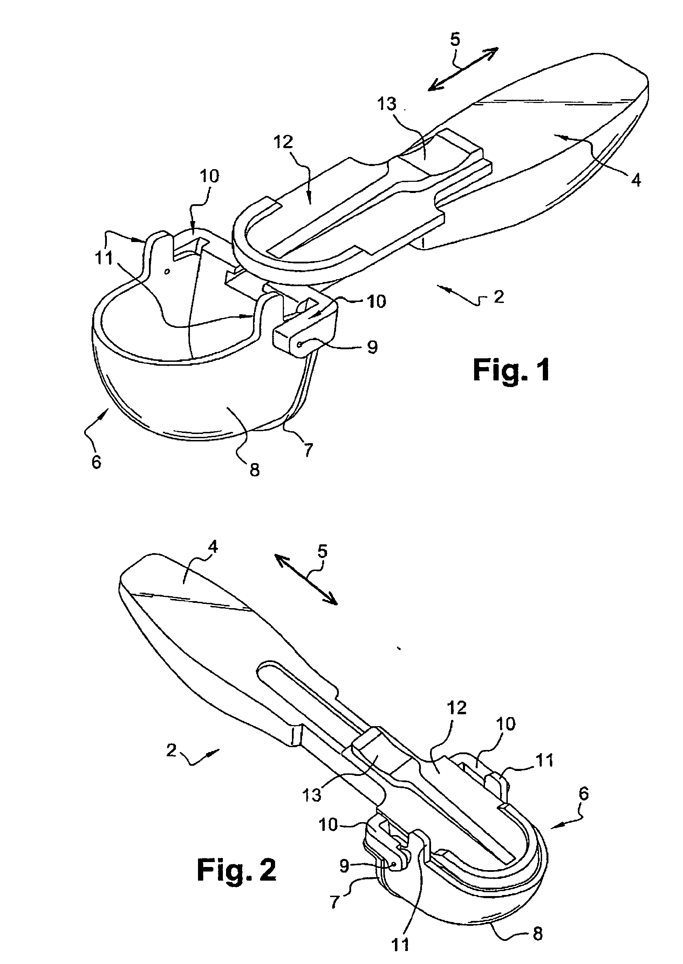

Enfin, afin de permettre un dosage précis du contenu de la cuillère 2, celle-ci comprend une raclette d'arasage 12. Cette raclette 12 est montée mobile par rapport au corps fixe 7 entre une position d'ouverture dans laquelle l'ouverture de remplissage est dégagée (cf. figure 1), et une position d'arasage dans laquelle l'ouverture de remplissage est obstruée (cf. figure 2). Cette raclette 12 est conformée afin de coulisser au-dessus du corps mobile 7, de façon affleurante. Dans le présent exemple, la raclette 12 est montée mobile en translation selon la direction longitudinale 5 du manche 4 et est supportée par ce dernier. Afin de faciliter sa manipulation, la raclette 12 comprend une surface de manipulation 13 qui, ici, a une forme adaptée pour la réception d'un pouce.

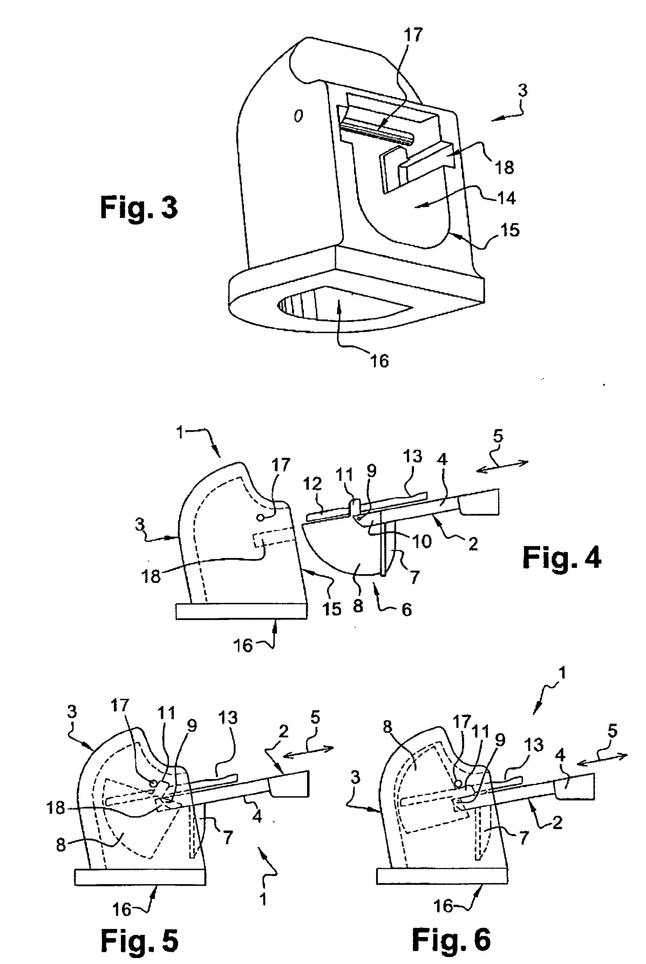

Le dispositif de transvasement 3 comprend une cavité de réception 14 qui est accessible d'une part, par une ouverture frontale 15, et, d'autre part, par une ouverture inférieure 16, les deux ouvertures 15, 16 étant formées dans des surfaces du dispositif perpendiculaires l'une de l'autre. La cavité 14 est adaptée à recevoir une cuillère, notamment la cuillère doseuse 2 du présent exemple ; l'ouverture frontale 15 est adaptée pour permettre l'introduction de la cuillère 2 dans la cavité 14 ; et l'ouverture inférieure 16 est adaptée pour permettre la décharge du contenu de la cuillère 2 quand celle-ci est dans la cavité 14 dans une position de décharge (cf. figure 6). En l'occurrence, quand la cuillère doseuse 2 de l'exemple est dans sa position de décharge, le corps mobile 8 de cette dernière est dans sa position de vidange.

Dans le présent exemple, afin de déclencher le déplacement du corps mobile 8 de la cuillère 2 lors de l'insertion de cette dernière dans la cavité 14, le dispositif de transvasement 3 comprend des moyens d'actionnement 17 qui sont adaptés à coopérer avec les organes d'activation 11. En l'occurrence, les moyens d'actionnement 17 sont formés par une surface horizontale 17 disposée sur la paroi supérieure de la cavité 14, à proximité de l'ouverture frontale 15. Cette surface 17 est adaptée à venir recevoir en butée les ergots 11 du corps mobile 8 de la cuillère 2. De ce fait, lors de l'introduction de la cuillère 2, quand celle-ci est à proximité de sa position de décharge, les deux ergots 11 viennent contre la surface d'actionnement 17. En poursuivant le mouvement d'introduction de la cuillère 2, la mise en butée des ergots 11 entraîne la rotation du corps mobile 8 et le dégagement de l'ouverture de vidange de la cuillère 2 (cf. figure 5). Dès cet instant-là, la cuillère 2 se trouve au droit de l'ouverture de décharge 16 de sorte que son contenu passe naturellement au travers des ouvertures de vidange et de décharge.

Ainsi, en disposant (voire, en fixant) le dispositif de transvasement 3 à un appareil de production de café, il est possible de remplir facilement et très proprement l'appareil d'une dose précise de mouture de café.

En outre, dans le présent mode de réalisation, afin de permettre un positionnement précis de la cuillère 2 dans le dispositif de transvasement 3, ce dernier comprend des moyens de guidage 18 (ici, deux rainures 18 longitudinales disposées de chaque côté de la cavité 14 et débouchant à l'ouverture frontale 15). Ces deux rainures 18 sont adaptées à coopérer avec la cuillère 2 afin de la guider de son introduction à sa position de décharge. Ici, ce sont les deux doigts 10 de la cuillère 2 qui coulissent le long des rainures 18.

Un utilisateur voulant préparer une boisson de café en employant un appareil à préparer une boisson à base de café à partir de mouture, d'une part dispose correctement le dispositif de transvasement 3 par rapport à l'appareil si ces deux éléments ne sont pas déjà fixés l'un à l'autre, et, d'autre part, plonge la cuillère doseuse 2 dans un récipient contenant de la mouture. Ensuite, il actionne la raclette d'arasage 12 pour avoir une dose précise de mouture, puis insère la cuillère 2 dans le dispositif de transvasement 3 (la raclette 12 pouvant recouvrir l'ouverture de remplissage ou non) via l'ouverture frontale 15, les doigts 10 pénétrant dans les rainures 18. En continuant l'introduction de la cuillère 2 dans la cavité 14, les deux ergots 11 viennent en butée contre la surface d'actionnement 17, ce qui entraîne le dégagement de l'ouverture de vidange et la chute de la mouture dans l'appareil à préparer les boissons.

## Revendications

1. Cuillère doseuse (2) comprenant un manche de préhension (4), un réservoir (6) adapté à contenir un produit pulvérulent, et un corps (8) mobile en rotation par rapport au manche (4) selon un axe de rotation (9) perpendiculaire à la direction longitudinale (5) du manche (4), entre une position de stockage dans laquelle il obstrue une ouverture de vidange située au fond du réservoir (6) et une position de vidange dans laquelle il découvre l'ouverture de vidange, le corps mobile (8) comprenant des organes d'activation (11) permettant l'entraînement du corps mobile (8) de l'une à l'autre de ses positions, **caractérisée en ce que** les organes d'activation (11) sont formés par deux ergots (11) faisant saillie verticalement au-delà de l'ouverture de remplissage du réservoir (6) et disposés en avant de l'axe de rotation (9) qui est disposé au niveau de l'ouverture de remplissage.

2. Cuillère doseuse (2) selon la revendication 1, **caractérisée en ce qu'**elle comprend un organe élastique sollicitant le corps mobile (8) dans sa position de stockage.

3. Cuillère doseuse (2) selon l'une des revendications 1 ou 2, **caractérisée en ce qu'**elle comprend une raclette d'arasage (12) montée mobile entre une position d'ouverture dans laquelle l'ouverture de remplissage est dégagée, et une position d'arasage dans laquelle elle est obstruée.

4. Cuillère doseuse (2) selon la revendication 3, **caractérisée en ce que** la raclette d'arasage (12) est
montée mobile en translation selon la direction longitudinale (5) du manche (4).

5. Cuillère doseuse (2) selon l'une des revendications 1 à 4, **caractérisée en ce que** le manche (4) est prolongée, au delà d'un corps fixe (7) qui délimite la partie arrière du réservoir (6), de deux doigts (10) s'étendant longitudinalement de chaque côté du corps fixe (7) et portant l'arbre de rotation (9) du corps mobile (4).

6. Système de versement (1) comprenant, d'une part, une cuillère doseuse (2) comportant un manche de préhension (4) et un réservoir (6) adapté à contenir un produit pulvérulent, et, d'autre part, un dispositif de transvasement (3) de poudre pulvérulente comportant une cavité de réception (14) accessible par une ouverture frontale (15) permettant l'introduction de la cuillère (2) dans la cavité (14), et par une ouverture inférieure de décharge (16) permettant la décharge du produit pulvérulent contenu dans la cuillère (2) quand celle-ci est dans une position de décharge dans la cavité (14), **caractérisé en ce que** la cuillère (2) comprend un corps (8) mobile par rapport au manche (4) entre une position de stockage dans laquelle il obstrue une ouverture de vidange située au fond du réservoir (6) et une position de vidange dans laquelle il découvre l'ouverture de vidange, le dispositif de transvasement (3) comprenant des moyens d'actionnement (17) adaptés à déplacer le corps mobile (8) dans sa position de vidange quand la cuillère (2) est insérée dans sa position de décharge.

7. Système de versement (1) selon la revendication 6, **caractérisé en ce que** le corps mobile (8) est monté en rotation par rapport au manche (4).

8. Système de versement (1) selon la revendication 7, **caractérisé en ce que** l'axe de rotation (9) du corps mobile (8) est perpendiculaire à la direction longitudinale (5) du manche (4).

9. Système de versement (1) selon la revendication 8, **caractérisé en ce que** l'axe de rotation (9) est disposé au niveau de l'ouverture de remplissage.

10. Système de versement (1) selon l'une des revendications 6 à 9, **caractérisé en ce que** le corps mobile (8) comprend des organes d'activation (11) adaptés à coopérer avec les moyens d'actionnement (17) du dispositif de transvasement de façon à permettre l'entraînement du corps mobile (8) de l'une à l'autre de ses positions.

11. Système de versement (1) selon la revendication 10, **caractérisée en ce que** les organes d'activation (11) sont formés par deux ergots (11) faisant saillie verticalement au-delà de l'ouverture de remplissage du réservoir (6), et disposés en avant de l'axe de rotation (9) du corps mobile (8), les moyens d'actionnement (17) étant formés par une surface (17) adaptée à recevoir en butée les deux ergots (11) et à entraîner le déplacement du corps mobile (8).

12. Système de versement (1) selon l'une des revendications 6 à 11, **caractérisé en ce que** la cuillère (2) comprend un organe élastique sollicitant le corps mobile (8) dans sa position de stockage.

13. Système de versement (1) selon l'une des revendications 6 à 12, **caractérisé en ce que** la cuillère (2) comprend une raclette d'arasage (12) montée mobile entre une position d'ouverture dans laquelle l'ouverture de remplissage est dégagée, et une position d'arasage dans laquelle elle est obstruée.

14. Système de versement (1) selon la revendication 13, **caractérisé en ce que** la raclette d'arasage (12) est montée mobile en translation selon la direction longitudinale (5) du manche (4).

15. Système de versement (1) selon l'une des revendications 6 à 14, **caractérisée en ce que** le manche (4) est prolongée, au delà d'un corps fixe (7) qui délimite la partie arrière du réservoir (6), de deux doigts (10) s'étendant longitudinalement de chaque côté du corps fixe (7) et portant l'arbre de rotation (9) du corps mobile (4).

16. Système de versement (1) selon l'une des revendications 6 à 15, **caractérisé en ce que** le dispositif de transvasement (3) comprend des moyens de guidage (18) adaptés à guider la mise en place de la cuillère (2) dans sa position de décharge.

17. Système de versement (1) selon la revendication 16 dépendante de la revendication 15, **caractérisé en ce que** les moyens de guidage (18) sont formés par deux rainures (18) disposées de chaque côté de la cavité (14) et débouchant à l'ouverture frontale (15), chaque rainure (18) étant adaptée à recevoir un doigt (10) de la cuillère (2).

## Patentansprüche

1. Dosierlöffel (2), der einen Greifstiel (4), einen Behälter (6), der geeignet ist, um ein pulverförmiges Produkt zu enthalten, und einen Körper (8) enthält, der bezüglich des Stiels (4) gemäß einer Drehachse (9) lotrecht zur Längsrichtung (5) des Stiels (4) zwischen einer Lagerstellung, in der er eine am Boden des Behälters (6) befindliche Entleerungsöffnung versperrt, und einer Entleerungsstellung drehbeweglich ist, in der er die Entleerungsöffnung aufdeckt, wobei der bewegliche Körper (8) Aktivierungsorgane (11) enthält, die den Antrieb des beweglichen Körpers (8) von der einen seiner Stellungen in die andere ermöglichen, **dadurch gekennzeichnet, dass** die Aktivierungsorgane (11) von zwei Zapfen (11) geformt werden, die senkrecht jenseits der Füllöffnung des Behälters (6) vorstehen und vor der Drehachse (9) angeordnet sind, die im Bereich der Füllöffnung angeordnet ist.

2. Dosierlöffel (2) nach Anspruch 1, **dadurch gekennzeichnet, dass** er ein elastisches Organ enthält, das den beweglichen Körper (8) in seine Lagerstellung beaufschlagt.

3. Dosierlöffel (2) nach einem der Ansprüche 1 oder 2, **dadurch gekennzeichnet, dass** er einen Glättabstreifer (12) enthält, der zwischen einer Öffnungsstellung, in der die Füllöffnung freigelegt ist, und einer Glättstellung beweglich angeordnet ist, in der sie versperrt ist.

4. Dosierlöffel (2) nach Anspruch 3, **dadurch gekennzeichnet, dass** der Glättabstreifer (12) in der Längsrichtung (5) des Stiels (4) translationsbeweglich montiert ist.

5. Dosierlöffel (2) nach einem der Ansprüche 1 bis 4, **dadurch gekennzeichnet, dass** der Stiel (4) jenseits eines ortsfesten Körpers (7), der den hinteren Teil des Behälters (6) begrenzt, durch zwei Finger (10) verlängert wird, die sich in Längsrichtung auf jeder Seite des ortsfesten Körpers (7) erstrecken und die Drehwelle (9) des beweglichen Körpers (4) tragen.

6. Schüttsystem (1), das einerseits einen Dosierlöffel (2), der einen Greifstiel (4) und einen Behälter (6) aufweist, der ein pulverförmiges Produkt enthalten kann, und andererseits eine Vorrichtung (3) zum Umfüllen von pulverförmigem Produkt enthält, die einen Aufnahmehohlraum (14) aufweist, der über eine stirnseitige Öffnung (15), die das Einführen des Löffels (2) in den Hohlraum (14) erlaubt, und über eine untere Entleerungsöffnung (16) zugänglich ist, die das Entleeren des in dem Löffel (2) enthaltenen pulverförmigen Produkts erlaubt, wenn dieser in einer Entleerungsstellung im Hohlraum (14) ist, **dadurch gekennzeichnet, dass** der Löffel (2) einen Körper (8) enthält, der bezüglich des Stiels (4) zwischen einer Lagerstellung, in der er eine am Boden des Behälters (6) befindliche Entleerungsöffnung versperrt, und einer Entleerungsstellung beweglich ist, in der er die Entleerungsöffnung aufdeckt, wobei die Umfüllvorrichtung (3) Betätigungseinrichtungen (17) enthält, die geeignet sind, um den beweglichen Körper (8) in seine Entleerungsstellung zu verschieben, wenn der Löffel (2) in seine Entleerungsstellung eingeführt wird.

7. Schüttsystem (1) nach Anspruch 6, **dadurch gekennzeichnet, dass** der bewegliche Körper (8) bezüglich des Stiels (4) drehbar montiert ist.

8. Schüttsystem (1) nach Anspruch 7, **dadurch gekennzeichnet, dass** die Drehachse (9) des beweglichen Körpers (8) lotrecht zur Längsrichtung (5) des Stiels (4) ist.

9. Schüttsystem (1) nach Anspruch 8, **dadurch gekennzeichnet, dass** die Drehachse (9) im Bereich der Füllöffnung angeordnet ist.

10. Schüttsystem (1) nach einem der Ansprüche 6 bis 9, **dadurch gekennzeichnet, dass** der bewegliche Körper (8) Aktivierungsorgane (11) enthält, die geeignet sind, um mit den Betätigungseinrichtungen (17) der Umfüllvorrichtung zusammenzuwirken, um den Antrieb des beweglichen Körpers (8) von der einen in die andere seiner Stellung zu erlauben.

11. Schüttsystem (1) nach Anspruch 10, **dadurch gekennzeichnet, dass** die Aktivierungsorgane (11) von zwei Zapfen (11) geformt werden, die senkrecht jenseits der Füllöffnung des Behälters (6) vorstehen und vor der Drehachse (9) des beweglichen Körpers (8) angeordnet sind, wobei die Betätigungseinrichtungen (17) von einer Fläche (17) geformt werden, die geeignet ist, um die zwei Zapfen (11) in Anschlag aufzunehmen und die Verschiebung des beweglichen Körpers (8) herbeizuführen.

12. Schüttsystem (1) nach einem der Ansprüche 6 bis 11, **dadurch gekennzeichnet, dass** der Löffel (2) ein elastisches Organ enthält, das den beweglichen Körper (8) in seine Lagerstellung beaufschlagt.

13. Schüttsystem (1) nach einem der Ansprüche 6 bis 12, **dadurch gekennzeichnet, dass** der Löffel (2) einen Glättabstreifer (12) enthält, der zwischen einer Öffnungsstellung, in der die Füllöffnung freigelegt ist, und einer Glättstellung beweglich montiert ist, in der sie versperrt ist.

14. Schüttsystem (1) nach Anspruch 13, **dadurch gekennzeichnet, dass** der Glättabstreifer (12) in der Längsrichtung (5) des Stiels (4) translationsbeweglich montiert ist.

15. Schüttsystem (1) nach einem der Ansprüche 6 bis 14, **dadurch gekennzeichnet, dass** der Stiel (4) jenseits eines ortsfesten Körpers (7), der den hinteren Teil des Behälters (6) begrenzt, durch zwei Finger (10) verlängert wird, die sich längs auf jeder Seite des ortsfesten Körpers (7) erstrecken und die Drehwelle (9) des beweglichen Körpers (4) tragen.

16. Schüttsystem (1) nach einem der Ansprüche 6 bis 15, **dadurch gekennzeichnet, dass** die Umfüllvorrichtung (3) Führungseinrichtungen (18) enthält, die geeignet sind, um das Einsetzen des Löffels (2) in seine Entleerungsstellung zu führen.

17. Schüttsystem (1) nach Anspruch 16 abhängig von Anspruch 15, **dadurch gekennzeichnet, dass** die Führungseinrichtungen (18) von zwei Rillen (18) geformt werden, die auf jeder Seite des Hohlraums (14) angeordnet sind und an der stirnseitigen Öffnung (15) münden, wobei jede Rille (18) geeignet ist, um einen Finger (10) des Löffels (2) aufzunehmen.

## Claims

1. Measuring scoop (2) comprising a gripping handle (4), a reservoir (6) adapted to contain a powdered product, and a body (8) movable in rotation relative to the handle (4) about a rotation shaft (9) perpendicular to the longitudinal direction (5) of the handle (4), between a storage position in which it blocks a draining opening located at the bottom of the reservoir (6) and a draining position in which it uncovers the draining opening, the movable body (8) comprising activation members (11) for driving the movable body (8) from one to the other of its positions, **characterized in that** the activation members (11) are formed by two lugs (11) projecting vertically beyond the filling opening of the reservoir (6) and disposed in front of the rotation shaft (9) that is disposed at the level of the filling opening.

2. Measuring scoop (2) according to Claim 1, **characterized in that** it comprises a resilient member biasing the movable body (8) into its storage position.

3. Measuring scoop (2) according to either one of Claims 1 or 2, **characterized in that** it comprises a levelling scraper (12) mounted movably between an open position wherein the filling opening is uncovered and a levelling position in which it is blocked.

4. Measuring scoop (2) according to Claim 3, **characterized in that** the levelling scraper (12) is mounted movable in translation in the longitudinal direction (5) of the handle (4).

5. Measuring scoop (2) according to any one of Claims 1 to 4, **characterized in that** the handle (4) is extended, beyond a fixed body (7) which delimits the rear portion of the reservoir (6), by two fingers (10) extending longitudinally on each side of the fixed body (7) and bearing the rotation shaft (9) of the movable body (4).

6. Pouring system (1) comprising, on the one hand, a measuring scoop (2) including a holding handle (4) and a reservoir (6) adapted to contain a powdered product and, on the other hand, a device (3) for transferring powdered product including a receiving cavity (14) accessible via a front opening (15) enabling introduction of the scoop (2) into the cavity (14) and via a bottom discharge opening (16) allowing discharge of the powder product contained in the scoop (2) when the latter is in a discharge position in the cavity (14), **characterized in that** the scoop (2) comprises a body (8) movable relative to the handle (4) between a storage position in which it blocks a draining opening situated at the bottom of the reservoir (6) and a draining position in which it uncovers the draining opening, the transfer device (3) comprising actuating means (17) adapted to move the movable body (8) into its draining position when the scoop (2) is inserted in its discharge position.

7. Pouring system (1) according to Claim 6, **characterized in that** the movable body (8) is mounted rotatably relative to the handle (4).

8. Pouring system (1) according to Claim 7, **characterized in that** the rotation shaft (9) of the movable body (8) is perpendicular to the longitudinal direction (5) of the handle (4).

9. Pouring system (1) according to Claim 8, **characterized in that** the rotation shaft (9) is disposed at the level of the filling opening.

10. Pouring system (1) according to any one of Claims 6 to 9, **characterized in that** the movable body (8) comprises activating members (11) adapted to cooperate with the actuating means (17) of the transfer device to allow driving of the movable body (8) from one to the other of its positions.

11. Pouring system (1) according to Claim 10, **characterized in that** the activating members (11) are formed by two lugs (11) projecting vertically beyond the filling opening of the reservoir (6) and disposed in front of the rotation shaft (9) of the movable body (8), the actuating means (17) being formed by a surface (17) adapted to receive the two lugs (11) and to drive the movement of the movable body (8).

12. Pouring system (1) according to any one of Claims 6 to 11, **characterized in that** the scoop (2) comprises a resilient member biasing the movable body (8) into its storage position.

13. Pouring system (1) according to any one of Claims 6 to 12, **characterized in that** the scoop (2) comprises a levelling scraper (12) mounted movably between an open position wherein the filling opening is uncovered and a levelling position in which it is blocked.

14. Pouring system (1) according to Claim 13, **characterized in that** the levelling scraper (12) is mounted movable in translation in the longitudinal direction (5) of the handle (4).

15. Pouring system (1) according to any one of Claims 6 to 14, **characterized in that** the handle (4) is extended, beyond a fixed body (7) which delimits the rear portion of the reservoir (6), by two fingers (10) extending longitudinally on each side of the fixed body (7) and bearing the rotation shaft (9) of the movable body (4).

16. Pouring system (1) according to any one of Claims 6 to 15, **characterized in that** the transfer device (3) comprises guide means (18) adapted to guide the placement of the scoop (2) in its discharge position.

17. Pouring system (1) according to Claim 16 when dependent on Claim 15, **characterized in that** the guide means (18) are formed by two grooves (18) disposed on each side of the cavity (14) and discharging at the front opening (15), each groove (18) being adapted to receive a finger (10) of the scoop (2).
